# EUROPEAN PATENT APPLICATION

(11) **EP 1 250 955 A1**
(43) Date of publication of application: **23.10.2002**
(21) Application number: 01204142.2
(22) Date of filing: 08.09.1998
(51) Int. Cl.: B01L 3/02, B01J 19/00

(54) **Method for the rapid screening of analytes**

(62) Divisional of application: 98940489.2
(71) Applicant: Tibotec N.V., 2800 Mechelen (BE)
(72) Inventor: Pauwels, Rudi Wilfried Jan, 2820 Bonheiden (BE); Roelant, Christian Hubert Simon, 3000 Leuven (BE); Van Acker, Koenraad Lodewijk August, 9140 Temse (BE)
(74) Representative: Daelemans, Frank F.R.

(57) **Abstract**

A method for the rapid screening of analytes, such as potential drug candidates, comprises the steps of applying a plurality of analytes to be screened onto one or more solid support(s) (61) such that the analytes remain isolated from one another; contacting said analyte-carrying solid support(s) (61) with targets provided in a semisolid or liquid medium, whereby said analytes are released from the solid support(s) (61) to the targets; and measuring analyte-target interactions. This method allows for the manipulation of thousands of different analytes simultaneously. When the analyte is applied to the solid support (61) it can diffuse thereon so as to produce a concentration gradient and serial dilution of analyte if a dose response curve for a candidate drug is required. The method described can be readily automated.

## Description

### Technical Field

This invention relates to a method for the rapid screening of large numbers of analytes, including the rapid screening of chemical compounds in liquid form for use as potential drugs.

### Background Art

Currently the identification of potential compound candidates for use as drugs is achieved by screening programmes and/or rational drug design. Whereas the *ab initio* drug design concept originally offered wide expectations of success, this approach has not proved successful in practice, principally due to a lack of a sufficiently clear relationship between molecular structure and receptor sites.

Accordingly, compound screening is still the technology of choice for the rapid identification and selection of lead compounds as candidate drugs. Various methods of high throughput screening (HTS) are currently used in the screening of compounds as potential drug candidates. However, the speed and cost-effectiveness of HTS is limited by the unavailability of equipment which can simultaneously handle large numbers of compounds in liquid form.

In current HTS, the microtitre plate plays a central role being the standard device in which assays are performed. The microtitre plate has determined the design of liquid handling equipment such as programmable liquid handling work stations and has also led to the development of microtitre plate peripherals for filtration, washing, reading and other operations involved in HTS.

To accommodate ever increasing high throughput requirements, microtitre plate-based equipment has been integrated with robotic manipulators. The central role of the microtitre plate and the continuously increasing throughput requirements has led to ever larger and more complex HTS-modules. Such complex modules include robot rails to access wider surfaces, automatic and larger microtitre plate incubators and storage devices for disposables. Additionally, complex operations scheduling programmes and integration software are required for optimal management of all of the hardware components.

The central role of the microtitre plate also determines other aspects of a typical screening process such as the chemical library aspects. Traditionally, compounds are synthesised, stored and catalogued at central chemical repositories from which new compounds are dispatched upon request from biological assay laboratories in- or outside an organisation. Often, each new compound has to be weighed and dissolved prior to each new assay. Therefore, it is essential that the compounds can be individually accessed and routinely retrieved. Driven by the latest HTS-system layouts and capacities, efforts are being made to adapt the physical storage conditions of compounds to the microtitre plate format. Hence, the development of dimethylsulfoxide-( DMSO ) dissolved stock compound stock solutions which are stored in microtitre plate format and whereby each compound is addressable through its location.

The basis of the HTS-infrastructure is still the 96-well standard microtitre plate and the majority of screening systems developed to date have been developed for use with this format.

However, higher density microtitre plates ( e.g. 384-, 864-, 1536 and 9600 well plates ) are incompatible with most equipment designed for the 96-well plate. As screening formats are likely to change considerably in the future, screening systems must have sufficient flexibility to meet this challenge.

The pace of HTS development to date has been determined by the development of fast liquid handling systems capable of handling small volumes of liquid to allow for the miniaturisation of assays in microtitre plate formats of which the number of wells has been scaled up dramatically in order to cope with ever increasing numbers of compounds to be screened. However, as the number of wells increases, the volume capacity of the wells decreases dramatically. Therefore it is obvious that this trend is becoming a self-limiting one because of the physical limitations imposed for example by biochemical equilibria relating to tissue culture in general where the control of pH, carbon dioxide exchange, humidity and temperature are of the utmost importance and which parameters are very difficult to control in small volumes of the type employed in high density microtitre plates.

One problem with the use of high density microtitre plate formats is that it is not possible to readily achieve serial dilution where a dose response curve is required. For example, it is not possible to carry out a serial dilution in the wells as such, so that the serial dilution must be carried out externally of the wells. However, even when the serial dilution is carried out in this way, one still has the problem of the liquid handling aspect of the screening process. Thus, for serial dilution one is currently effectively confined to the use of the 96-well microtitre plate. Also, even when the handling of compounds is under robotic control, the number of compounds that can be handled at any given time is typically 8 or 12 with a maximum of 96.

We are unaware of any system to date which can simultaneously process large numbers of analytes for screening 100 or more and even up to 1000 analytes simultaneously, hereinafter referred to as a larger number of analytes.

There is a need therefore for a method for the simultaneous screening of large numbers of analytes and which method obviates the difficulties and limitations of current HTS systems.

There is also a need for a method for the simultaneous manipulation of large numbers of analytes with means for simplifying identification and retrieval of the analytes for HTS.

### Disclosure of Invention

The invention provides a method for the rapid screening of analytes, comprising the steps of:
a) simultaneously applying a plurality of analytes to be screened onto one or more solid support(s) such that the analytes remain isolated from one another;
b) contacting said analyte-carrying solid support(s) with targets provided in a semi-solid or liquid medium, whereby said analytes are released from the solid support(s) to the targets; and
measuring analyte-target interactions.

The method according to the invention allows for the manipulation of thousands of different analytes simultaneously.

Preferably, step a) of the method according to the invention comprises (i) disposing the analytes within individually identifiable containers, and (ii) transferring the analytes from the containers to the solid support(s) in such a manner as to maintain the transferred contents of each container separate from those of each other container.

The individually identifiable containers are preferably selected from tubes, including capillary tubes, pens, including plotter pens, and print heads or any container allowing for the storage and direct application of an analyte from the container to a given solid support.

Further, preferably, the individually identifiable containers are an array of capillary tubes each of which is identifiable according to its position within the array, and wherein transfer of the analytes to the solid support(s) occurs by dispensing thereof through the open ends of the capillary tubes.

Especially preferred arrays are individual containers disposed in concentric or spiral arrays.

Transfer of the analytes to the solid support can be achieved by dispensing said analytes from the open ends of the capilliary tubes to the solid support with or without direct contact between the capilliary tubes and the solid support.

The analytes can be transferred to the solid support in variable amounts. Thus, by varying the drop size transferred one can achieve a serial dilution, if required.

Simultaneous transfer of analyte from the capilliaries can be achieved by applying a stimulus such as a change of pressure using a piezoelectric element. Alternatively, one can use high frequency conditions to break a liquid column into droplets which are dispensed to the solid support, as required. The droplet size will typically be nanolitre or picolitre in volume.

Thus, one can achieve an assay format in accordance with the invention where the analyte is not pipetted in as is currently the norm but is applied directly from its individual container to the assay medium.

It will be appreciated that the individually identifiable containers described herein provide a means of storing stock compounds which can be accessed and used as required. Thus, the analyte application units can consist of individual identifiable containers assembled in addressable compartments that can be retrieved automatically as a whole and from which the analytes can be applied directly to a solid support.

For example, a preferred embodiment of the identifiable container is a capilliary tube and stock compounds in solution are taken up in a plurality of such capilliary tubes by capilliary action.

In this way unlimited numbers of capillaries can be filled without special energy requirements. Capillary tubes filled with stock solutions of compounds can be stored at desired temperatures and conditions.

The method according to the invention allows for the simultaneous mass application of analytes onto a solid support. For example, as described in greater detail herein one can achieve simultaneous mass application of equal volumes of 10,000 or more compounds from an array of individual containers such as capilliaries to a solid phase. The amount of compound delivered can be determined by the contact time of the capilliaries with the solid support. The analyte containers can also suitably be individual addressable plotter pen-like devices allowing simultaneous drawing of parallel lines of analyte on a solid support of choice.

After compound delivery the compounds, which can be disposed as a pattern of discrete spots or lines, are left to dry on the solid phase.

In one embodiment, the solid support is of a substantially flat, disc-, rectangular- or square- shape.

The solid support can comprise a material which allows for spontaneous release of the analyte(s) when applied thereto.

Alternatively, the solid support can comprise a material which allows for controlled release of the analyte(s) when applied thereto.

In each case, the material can be said semi-solid medium.

Preferably, when each analyte is applied to the solid support it diffuses thereon so as to produce a concentration gradient.

In this way one can achieve a serial dilution of analyte if a dose response curve for a candidate drug is required, rather than a simple positive or negative (yes/no) result.

Utilisation of retarded analyte diffusion in a semi-solid medium or matrix further eliminates the need for physical separation as in the case of the wells of a microtitre plate and the necessity of serial dilution of analytes, when such is required as a concentration gradient will be established by passive diffusion.

Preferably the surface of the solid support onto which the analytes are applied is selected from polymers, ceramics, metals, cellulose and glass.

Further, preferably, said semi-solid medium is disposed on a carrier.

In another embodiment, the solid support is in the form of a flexible film or tape onto which the target-containing semi-solid medium is applied, whereby the method can be automated using a system of rollers to progress the flexible film or tape through the various steps of the method.

In this embodiment, the carrier can be covered by a further layer of film or tape and is thereby sandwiched between the solid support and the covering layer.

Furthermore, the solid support or covering layer (if present) can be provided with a track for the recordal of information regarding the applied analytes, whereby the information can be read and processed simultaneously with the measurement of analyte-target interactions in an automated process.

In a further embodiment, the solid support is itself a detector or forms part of a detector.

In this embodiment, the solid support is preferably selected from a SiO₂ wafer, a charge-coupled device and a photographic film.

The surface of the solid support can be coated with a membrane, a molecular monolayer, a cellular monolayer or a Langmuir-Blodgett film.

All of these coatings can be used to control the release of analytes when applied thereto.

In another embodiment, the solid support is itself an information carrier which carries information in electronic, magnetic or digitised form.

In an alternative embodiment, the surface of the solid support is reflective. For example, the surface can be the reflective surface of a compact disc.

The method according to the invention can further comprise the step of copying said compact disc to a writable compact disc.

In another embodiment, the semi-solid medium comprises a substance which provides a semi-solid or viscous liquid environment allowing controlled release of said anlaytes to said target.

Preferably, the substance which provides a semi-solid or viscous liquid environment is selected from gelatin, polysaccharides such as agar and agarose, and polymers such as methylcellulose and polyacrylamide or a so-called intelligent material. Such substances can also be used to control the release of the analytes when applied thereto.

So-called intelligent materials are natural and synthetic polymer gels that are undergo phase transitions and critical phenomena, for example phase transitions accompanied by a reversible, discontinuous volume change as large as several hundred times, in response to infinitesimal changes in environmental conditions.

Examples of so-called intelligent materials are polymeric gel-type materials, more particularly hydrogels that can take up a fluid and subsequently release that fluid in response to a chemical or physical stimulus or trigger. An example of a chemical stimulus is a change of pH or ionic or solvent composition and an example of a physical stimulus is light of a particular wave-length or a laser beam, a change of temperature or a small electric field.

For example, a gel containing N-isopropylacrylamide (main constituent) and the light-sensitive chromophore, the trisodium salt of copper undergoes phase transitions induced by visible light (Suzuki, A. and Tanaka, T (Nature (1990); *346, 345-347*).

A range of suitable thermo-sensitive polymers is described by Snowden, M.J. *et al*. (Chemistry & Industry (July, 1996); p.p. 531-534.

Other suitable gels are those sold under the Trade Mark THERA GEL marketed by Gel Sciences Inc., Boston, M.A., U.S.A.

In a further embodiment, steps a) and b) are carried out simultaneously.

In a still further embodiment, each analyte is applied to a single solid support.

In this embodiment, the solid support is preferably of a rod shape or a spherical shape.

Further, preferably each analyte-bearing solid support is contacted in step b) with a target in a separate compartment of a multi-compartmented apparatus, more especially said compartments are an arrangement of mini-wells in said apparatus.

In another preferred embodiment, the analyte containers are small inert solid supports onto the surfaces of which analytes have been applied. Dipping of the solid supports into a liquid phase or semi-solid phase results in time-dependent release of analyte from the solid support into the liquid or semi-solid phase. In this way, dilutions of minute amounts of analytes in liquid or semi-solid phase can be obtained without the use of liquid handling devices. The final concentration of analyte released into the liquid or semi-solid phase is determined by the contact time between the analyte-carrying solid suppport and the liquid- or semi-solid phase.

The analytes for rapid screening in the method according to the invention are preferably selected from chemical compounds, antigens, antibodies, DNA-probes, cells and beads and liposomes carrying an analyte of interest.

Further, preferably, the analytes, when applied to the solid support, are dissolved in an organic or inorganic solvent.

Suitably, the solvent includes a so-called intelligent material responsive to a chemical or physical parameter such that each analyte, following application to the solid support and drying, liquifies in response to said chemical or physical parameter.

The analyte in a preferred embodiment is a chemical compound for screening as a potential drug candidate.

Preferably, the targets are selected from prokaryotic cells, eukaryotic cells, viruses, molecules, receptors, beads, and combinations thereof.

As used herein compound(s) means any synthetic, semi-synthetic or naturally-occuring compound or combination thereof.

In one embodiment the targets are cells equipped with reporter functions.

In a preferred embodiment the targets are mammalian cells equipped with single or multiple reporter construct(s). The activity and/or expression of the reporter genes is dependent on the impact of the specific experimental conditions, for example the *in vitro* effect of compounds released from the solid support to a semi-solid phase.

The incubation unit used in this embodiment will typically be an incubator of the type that is generally used for tissue culture.

The detection unit used to measure the compound-cell interaction will suitably consist of an inverted microscope (e.g. Zeiss Axiovert 100) coupled to a video camera (e.g. dage-MTI CCD72E) and computer system (e.g. PC 300 Mhz Pentium) with KS400 basic software and the graphic KS400 option. The inverted microscope can be further equipped with a scanning stage modified to fit all culture plate configurations ( from 6-well up to 9600 well formats ) as well as other formats of the type described herein and equipped with a stepper motor with a resolution of 17,600 steps *per* revolution. The KS400 software package provides easy to use menus for entering configuration, calibration and assay parameters or data analysis specifications.

Other detection means include the use of computer-assisted image analysers.

In the event that adherent cells are used as a target, these cells are grown confluently either covering the surface of the solid support or the surface of small beads which are then homogeneously suspended in the semi-solid phase.

Still further, preferably, said analyte-target interactions are measured using one or more of the following methods: microscopic, colorimetric, fluorometric, luminometric, densitometric, isotopic, and physical measurements.

For example, one can use a combination of microscopy and fluorescence. Accordingly, the microscope can be configured for epifluorescence fitted with a stepper motor and a camera system. Image acquisition and interpretation can be PC controlled.

It will be appreciated that the method according to the invention provides for the coupling of the principle of compound diffusion in semi-solid media containing experimental biological systems to image microscopy systems. The invention also provides for visualising and determining the effect of compounds on prokaryotic and eukaryotic cell function. This visualisation can be achieved with genetically engineered cells embedded in a semi-solid medium and expressing single or multiple reporter genes of which the expression product(s) is/are an intracellular fluorophore(s) of specific excitation and emission wavelengths matching wavelength characteristics of a high density fluorescence image microscopy system.

By way of example, the method according to the invention typically comprises the steps of:
a) direct application of compounds to be screened as potential drug candidates onto a solid support;
b) layering of a semi-solid medium containing targets of interest over the compound carrying support;
c) diffusion of compounds into the semi-solid medium;
d) incubation;
e) visualisation and registration of the compound-target interaction.

By way of example if one wishes to screen potential drugs or drug combinations for use in the treatment of individuals infected with the HIV virus, having full-blown AIDS or ARC, then suitable targets for use in accordance with the invention are genetically engineered green fluorescent protein (GFP)-expressing MT4 cells containing the long term no repeat (LTR) promotor (pLTR-EGFP-Cl) and deposited at the BCCM on August 20, 1998, under Accession No. LMBP3879.

pLTR-EGFP-Cl (4777bp) is based on pEGFP-Cl (Clontech). In pEGFP-C 1 expression of the enchanced green fluorescent protein (EGFP) is controlled by the strong human cytomegalovirus immediate early promotor (589bp). In pLTR-EGFP-Cl the CMV promotor is replaced by the HIV-1 long terminal repeat LTR (652bp) containing the highly inducible promotor in the U₃ region.

Such cells when infected with HIV become fluorescent due to activation of LTR and expression of GFP. If a candidate drug inhibits HIV, for example by inhibiting the viral reverse transcriptase, protease or integrase fluorescence is reduced or totally inhibited and one observes progressively darkened regions in the area of the compound-target interaction.

Step b) of the method according to the invention will typically involve maintaining the analytes and the targets under appropriate assay conditions and for a sufficient period of time for the release of the analytes from the solid support and the diffusion of said analytes into the liquid or semi-solid phase containing the targets of interest. Maintaining appropriate assay conditions will include maintaining correct temperature, osmolality, pH, tonicity and the like. These conditions are further determined by the nature of the targets.

Typically, with mammalian cells as a target, the temperature can range from about 4°C to about 50°C and pH can range from about 6.5 to about 7.5. Osmolality and tonicity will be chosen in a manner so that optimal cell-analyte interactions can be obtained. The only limitation on physical conditions is that the conditions used do not adversely affect cell viability nor interfere with analyte target interactions.

It will be appreciated that the method according to the invention can be carried out in a fully integrated system.

The method according to the invention facilitates the use of a data management unit. Such a unit suitable comprises chemical compound library data with compound identification, history tracking and software technology allowing accessing and identification of compounds within the warehouse installation at all times.

In another preferred embodiment, analyte application, analyte target interaction, incubation, detection and data interpretation are linked in such a way that the entire screening method according to the invention is a fully automated method from start to finish. One typical example of an automated method of rapid screening of compounds according to the invention comprises the steps of:
1. Application of compounds by means of capillary delivery producing either discrete spots or discrete lines of compounds onto the surface of a carrier, such as a transparent film or information carrier used in the audio-casette industry;
2. Drying the surface of the carrier;
3. Layering of cells embedded in a semi-solid matrix of constant thickness over the surface of a transparent film;
4. Contacting the surface of the carrier containing spotted compounds or discrete compound lines and the surface of the film serving as the semi-solid matrix carrier;
5. Winding of the contacted film surfaces;
6. Incubation of the wound film;
7. Unwinding of the film and exposure to a detection and information reading unit;
8. Continuous reading of exposed film by means, for example, of a fluorescence microscope image analysis system; and
9. Data analysis.

Outer surfaces (non-compound carrying or which are not in contact with the semi-solid matrix) can contain digital information regarding the identity of the applied compounds which is read simultaneously during sample analysis as described in step 8. In this way, biological information and compound information can be read and processed at the same time.

### Brief Description of the Drawings

Fig. 1 illustrates the principle of compound diffusion in a semi-solid matrix as described in Example 1 at a cell density of 10E5/ml:
Fig. 2 illustrates the principle of compound diffusion in a semi-solid matrix as described in Example 1 at a cell density of 10E6/ml;
Fig. 3 illustrates the principle of compound diffusion in a semi-solid matrix as described in Example 1 at a cell density of 10E7/ml;
Fig. 4 is a capillary tube holder device (8 x 12) as described in Example 2;
Fig. 5 shows the fluorescence observed with GFP (green fluorescent protein) expressing MT4-cells (LTR (long term no repeat) promotor) in RPMI (Rosemount Park Memorial Institute) medium without phenol red, 10% FCS (fetal calf serum) and 1% Pen-Strep (penicillin-streptomycin) in the absence (a) and in the presence of HIV-1 (b) as described in Example 3;
Figs. 6(a) and (b) show the fluorescence observed with GFP expressing MT4-cells (LTR promotor) in semi-solid phase (RPMI medium without phenol red, 10% FCS, 1% Pen-Strep, agar 0.34 %) in the absence (a) and in the presence of HIV-1 (b) as described in Example 3;
Figs. 7(a) - (e) show the fluorescence observed with GFP-expressing MT4-cells (LTR promotor) in RPMI medium (without phenol red and supplemented with 10% FCS, 1 % Pen-Strep) in the absence (a) and in the presence of HIV-1 (b) and in the presence of HIV-1 and the reverse transcriptase inhibitors: AZT (c), 3TC (d) and Loviride (e) at a final concentration of 2.5 µM in a total volume of 20 µl as described in Example 3;
Figs. 8(a) - (e) show the fluorescence observed with GFP-expressing MT4-cells (LTR promotor) in semi-solid phase 0.34% agar in RPMI medium (RPMI medium without phenol red, supplemented with 10% FCS and 1% Pen-Strep) in the absence (a) and in the presence of HIV-1 (b) and in the presence of HIV-1 and the reverse transcriptase inhibitors: AZT (c), 3TC (d) and Loviride (e) spotted (1 µl of a stock solution) onto a surface of a solid support at a concentration producing a 2.5 µM end concentration, assuming complete diffusion of the compounds in 20 µl semi-solid phase as described in Example 3;
Fig. 9 shows the fluorescence observed with HIV-1 infected MT4-cells in semi-solid phase (0.34% agar in RPMI medium without phenol red, supplemented with 10% FCS and 1% Pen-Strep) when HIV-1 infected cells were admixed with a solid support onto which 1µl of 2.5 µM, 250 nM and 2.5 nM of reverse transcriptase inhibitors were applied, left to dry and kept for one week at 4°C prior to use as described in Example 3;
Fig. 10 shows the fluorescence observed with HIV-1 infected MT4-cells in medium (RPMI without phenol red, supplemented with 10% FCS and 1% Pen-Strep) when HIV-1 infected cells were added in medium to the wells of a 384-well tissue culture plate containing 1 µl of 2.5 µM, 250 nM and 2.5 nM of the reverse transcriptase inhibitors AZT, 3TC and Loviride, respectively as described in Example 3;
Fig. 11 is a schematic representation of a solid support carrying spotted compounds in the method according to the invention;
Fig. 12 illustrates schematically how the distance between capillaries in an array can be varied and adapted to the specific requirements of the method according to the invention;
Fig. 13 is a diffusion pattern of calcein in a semi-solid phase on a solid support in accordance with the invention;
Fig. 14 illustrates the principle of automated on-line mega-throughput screening using the method according to the invention;
Fig. 15 is a schematic representation with exploded detail of capilliary tube sorting means;
Figs. 16(a) - (c) show the movement of the capilliary tubes of Fig. 15 to a microtitre plate for filling;
Fig. 17 illustrates the filling of the capilliary tubes of Fig. 15;
Fig. 18 shows a screw device used to reduce the spacing between the capilliary tubes of Fig. 15;
Fig. 19 shows the individual capilliary tubes of Fig. 15 being formed into a spiral array;
Fig. 20 illustrates means by which the liquid in the capilliary tubes of Fig. 15 is released onto a solid support;
Fig. 21 illustrates a sample deposition pattern;
Fig. 22 is a plan view of a solid support with analytes spotted thereon; and
Fig. 23 illustrates the application of a semi-solid phase to the solid support.

### Modes for Carrying out the Invention

The invention will be further illustrated by the following Examples:

### Example 1

### Principle of compound diffusion and interaction with cells embedded in a semi-solid medium

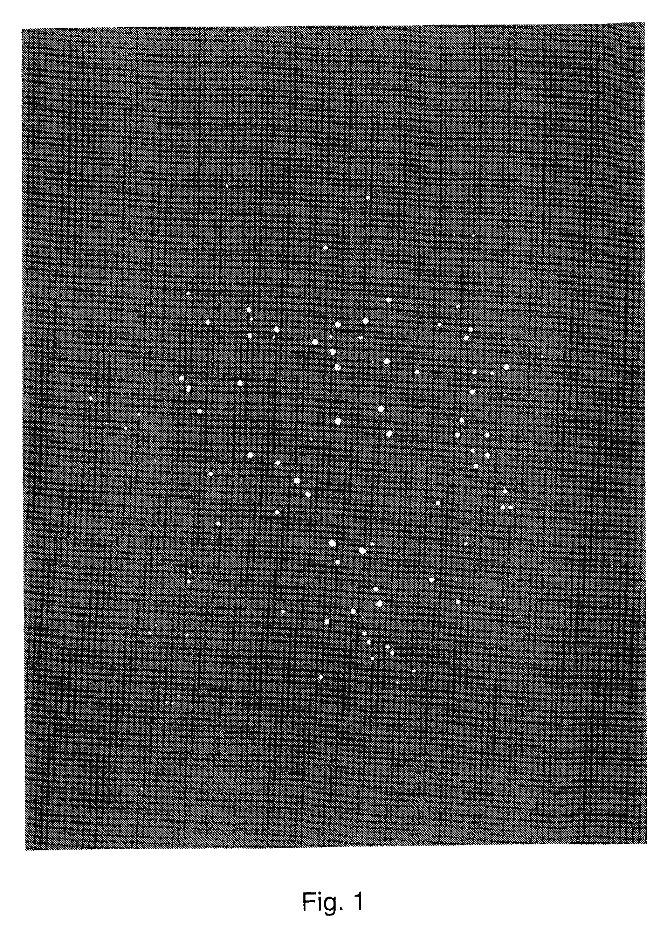

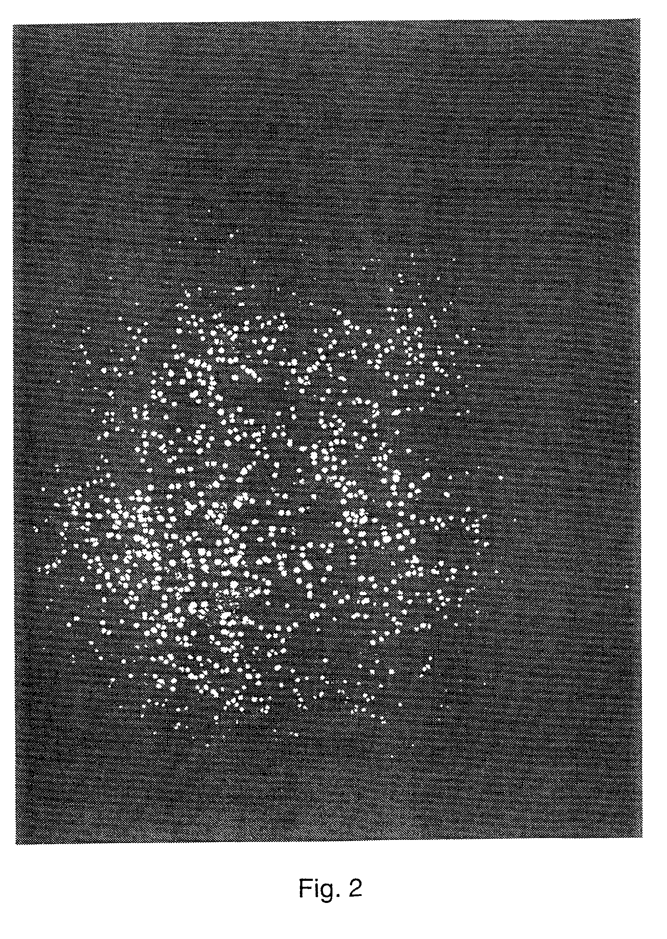

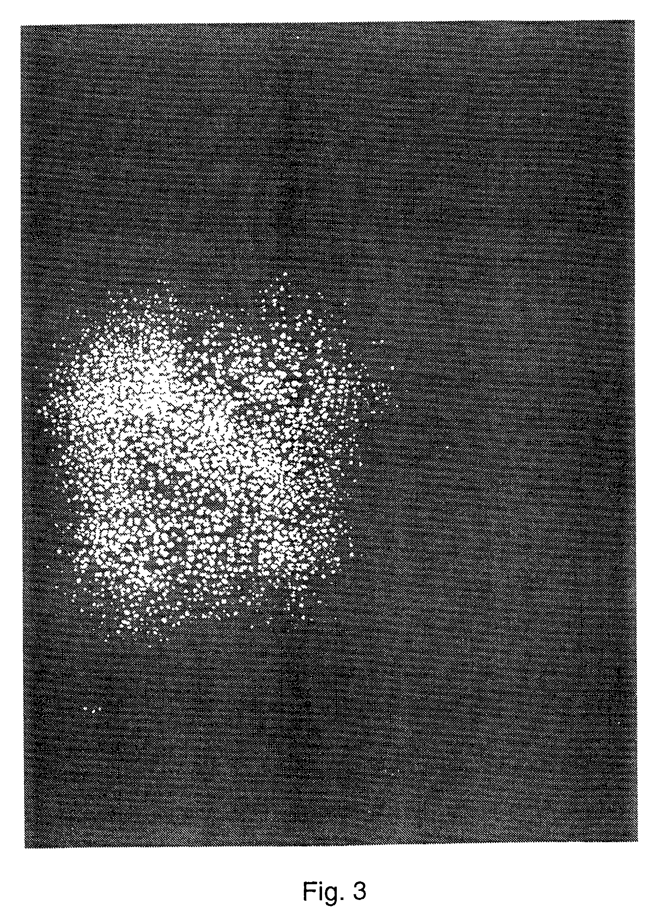

Calcein, a cell viability marker was dissolved at a concentration of 5 mM in dimethyl sulfoxide (DMSO). A glass capillary tube with a total volume capacity of 0.5µl was dipped into the calcein solution and filled by capillary action. The tip of the capillary tube was then contacted with a polystyrene surface in a such a way that a small drop of calcein solution was delivered from the capillary tube to the plastic surface. After drying of the drop, 20µl of a cell suspension in semi-solid medium (MT4 cells suspended in RPMI (Rosemount Park Memorial Institute) 1640 medium, without phenol red, supplemented with 10% FCS (fetal calf serum), 1% Pen-Strep (penicillin-streptomycin) and containing 0.34% agar) was layered over the dried calcein spot. After an incubation time of 2 hours at 37°C (humidified atmosphere and 5 % carbon dioxide) the diffusion of the calcein into the semi-solid phase was observed by means of fluorescence microscopy and visualisation of the fluorescence produced by the embedded MT4 cells. The method of drop delivery, drying and layering of semi-solid matrix containing increasing densities of embedded MT4 cells is illustrated in Figs. 1,2 and 3.

It follows from these results that the distance over which diffusion of calcein takes place in a semi-solid matrix of constant density is also determined by the number of embedded cells.

### Example 2

### Principle of high density compound application and diffusion in a semi-solid matrix

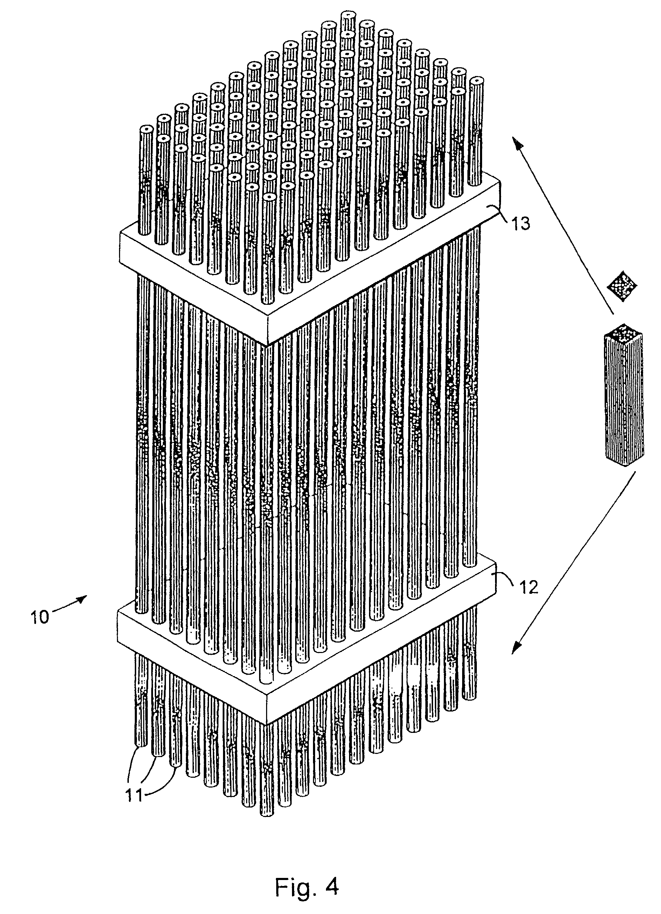

A bundle of capillaries filled with calcein and arranged (8 x 12) in a holder device as depicted in Fig. 4 was contacted with a surface of polystyrene so that a drop of calcein was delivered simultaneously from each capillary to the polystyrene surface. The holder device is indicated generally at 10 and comprises capillary tubes 11 mounted in plates 12, 13 for maintaining the capillary tubes 11 in the desired relationship with respect to each other. Following drying, a homogeneous suspension of MT4 cells in RPMI 1640 medium supplemented with 10% FCS, 1% Pen-Strep and 0.34% agar was layered over the spots. After an incubation period of 2 hours (humidified atmosphere, 5% carbon dioxide) it was found that for each of the spots the distance of diffusion of the calcein in the semi-solid matrix was reflected by the fluorescence of the embedded MT4 cells.

### Example 3

### Compound target interaction: Effect of anti-HIV compounds on the fluorescence of GFP-expressing MT4 cells (LTR promotor) in the presence of HIV-1 in a semi-solid phase

Three compounds of well known activity against HIV-1 (AZT, 3TC and Loviride) were spotted (+/- 1 µl from stock in a capillary tube as hereinbefore described) onto the bottom surface of the wells of a transparent 384-well polystyrene tissue culture plate. The compounds in the wells were left to dry and stored at 4°C.

One week later, MT4 cells were collected from tissue culture flasks and suspended at 10E7/ml in RPMI medium. This cell suspension was further equally divided into four tubes. These tubes were then centrifuged at 450 g, for 10 min. To the cell pellets obtained after centrifugation of two of these tubes, 200 µl HIV suspension in RPMI medium were added for a period of 2 hours at 37°C. The other two tubes were treated in the same way, except that no virus was added. After an incubation time of 2 hours, agar solution (39°C) was added to one tube containing cells and HIV and to one tube only containing cells at a final concentration of 0.34%. Then, 20 µl of the cell suspension in agar and 20 µl of the cell/virus-agar suspension were added to the different wells of a 384-well plate containing the spotted compounds as set forth above.

To the cell pellets of the remaining two tubes, 200 µl medium and 200 µl virus containing medium were added respectively. After an incubation period of 2 hours at 37°C, the final volume was corrected (made equal to the final volume of the agar composition) and 20 µl of the non-infected and infected cell suspensions were added to the wells of the 384-well culture plate with spotted compounds as described above.

1µl volumes of compounds were added to the wells immediately before the HIV-infected cells were added. Total assay volume was 20µl.

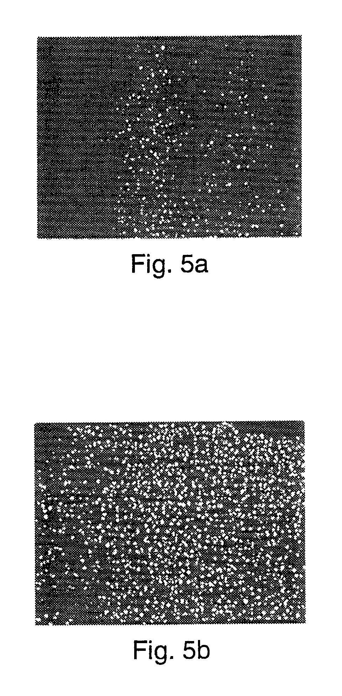

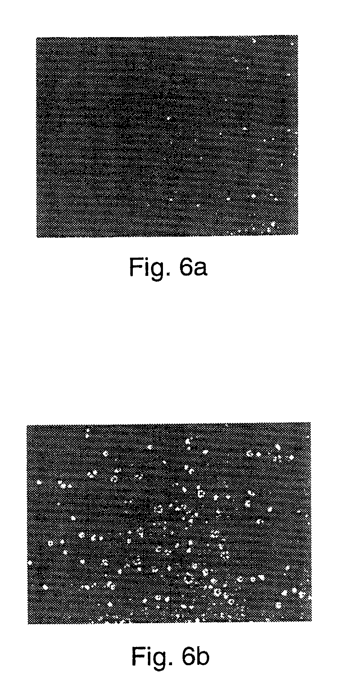

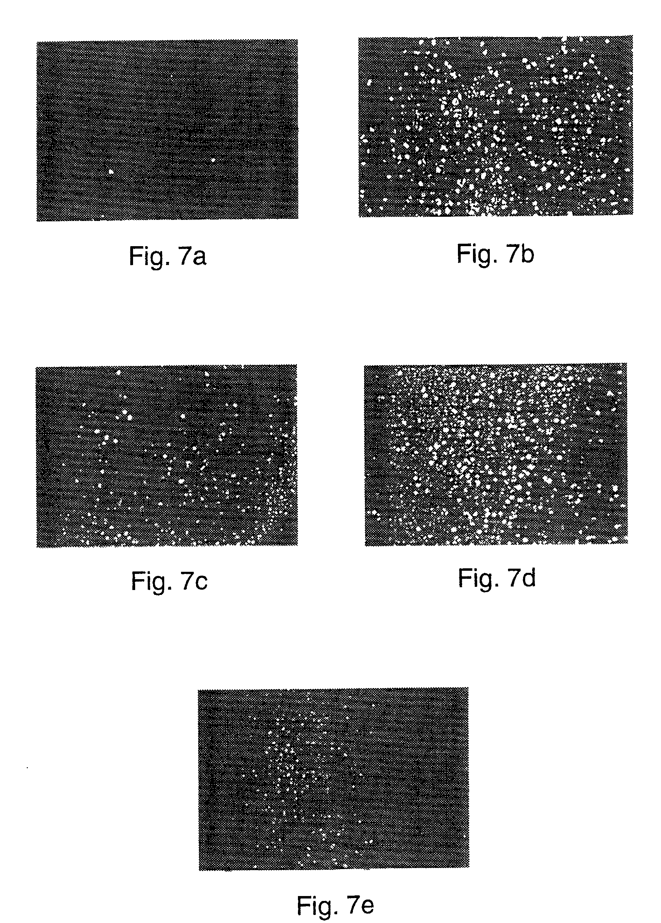

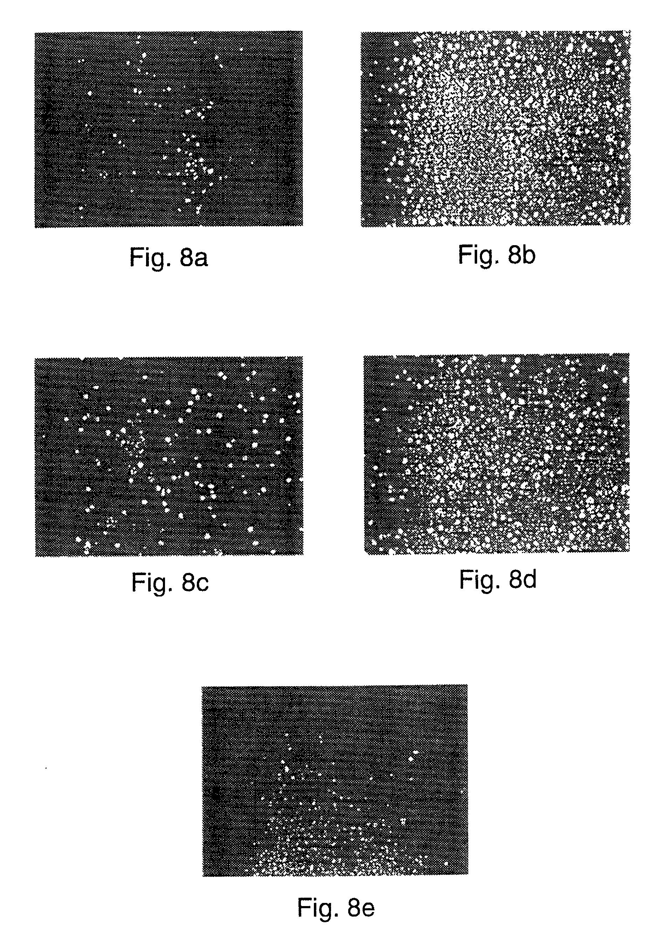

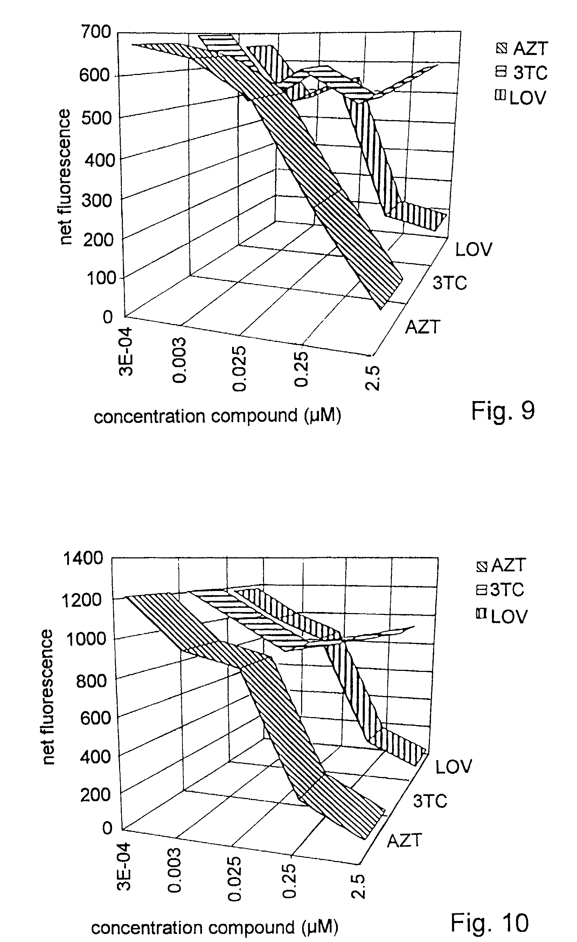

After a 3-day incubation period, the fluorescence of the GFP-expressing MT4 cells was evaluated by fluorescence microscopy and plate reading. The results are summarized in Figs. 5-10. These data show that following the application of compounds onto a solid support (well of a 384-well microtitre plate) and after storage for 1 week at 4°C, the activity (protective effect of these compounds against HIV-1 infection) did not differ from the situation where compound diffusion takes place in a liquid phase.

Furthermore, the results obtained show that the concentration-dependent effects of RT inhibitors on HIV-1 infection as reflected by GFP-expressing MT4-cells are observed in semi-solid phase and that the nature of the compound and its effectiveness for HIV-1 RT inhibition is not affected by the use of a semi-solid medium.

The invention will be further illustrated by the following description of embodiments thereof given by way of example only with reference to the accompanying drawings.

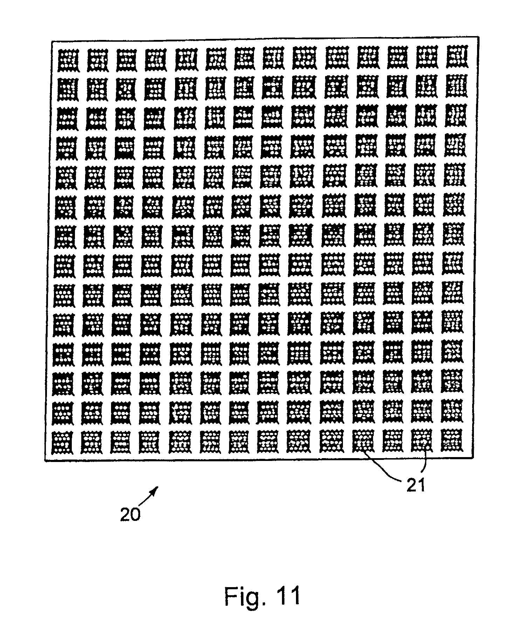

Referring to Fig. 11, there is indicated a solid support 20 carrying compounds 21 which have been spotted thereon from an array of 196 bundles of capillary tubess (not shown) each carrying 110 capillary tubes so that 21,560 compounds are spotted onto the solid support 20.

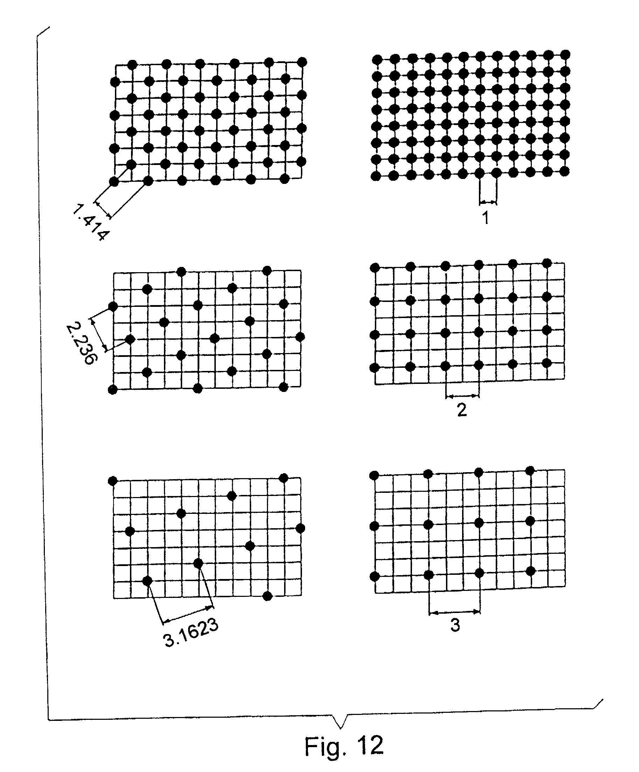

Fig. 12 illustrates how the distance between the capillaries in an array can be varied (1.414 mm, 1 mm, 2.236 mm, 2 mm, 3.623 mm, 3 mm) to meet the specific requirements of a screening method in accordance with the invention.

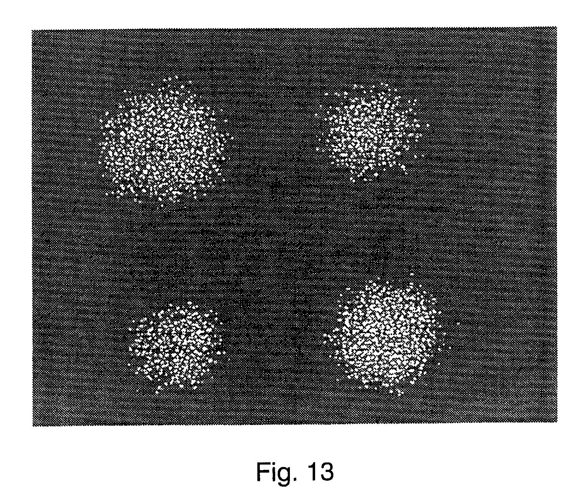

Fig. 13 is a diffusion pattern of calcein in a semi-solid phase on a solid support. Calcein was spotted on a polystyrene surface using a capillary compound holder device as depicted in Fig. 4 with capillary tubes arranged at a centre to centre distance of 2 mm. The density of overlying cells, suspended in the semi-solid phase (RPMI 1640 medium, 10% FCS, 1% Pen-Strep, 0.34% agar) was 10E7 cells (MT4)/ml. Detection was carried out by fluorescence microscopy after a two hour incubation period.

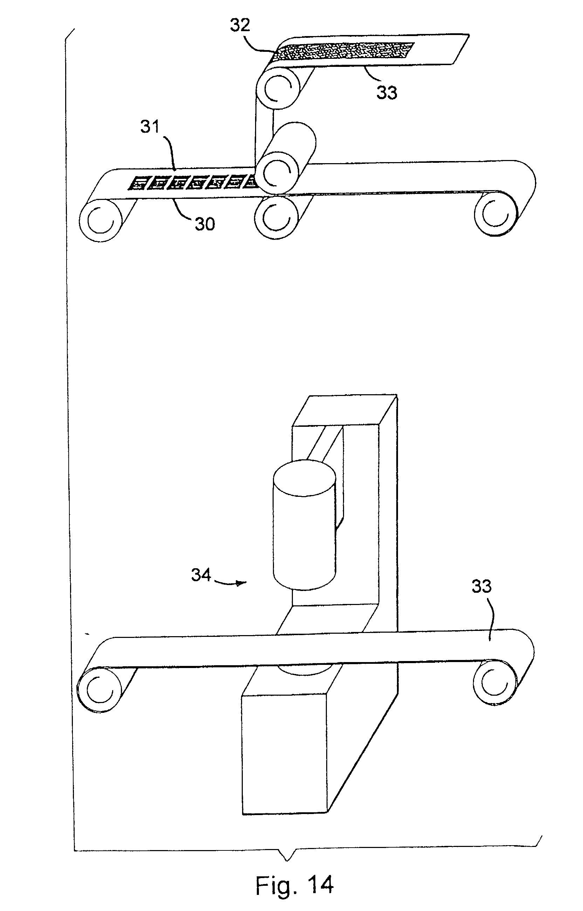

Fig. 14 is a schematic representation of an automated method for the rapid screening of compounds in accordance with the invention. An information carrier 30 in the form of a film or tape and with compounds to be screened applied as discrete spots or lines on its surface 31 is brought into contact with surface 32 of an information carrier 33, which is also a film or tape, bearing targets of interest embedded in a semi-solid matrix. The respective carriers 30, 33 are then wound with their surfaces 31 and 32 in contact and incubated in a temperature, humidity and carbon dioxide controlled environment, such that the compounds are released to the surface 32 of the carrier 33. The carriers are then unwound and the carrier 33 is then passed to an analysis - and information reading unit indicated generally at 34.

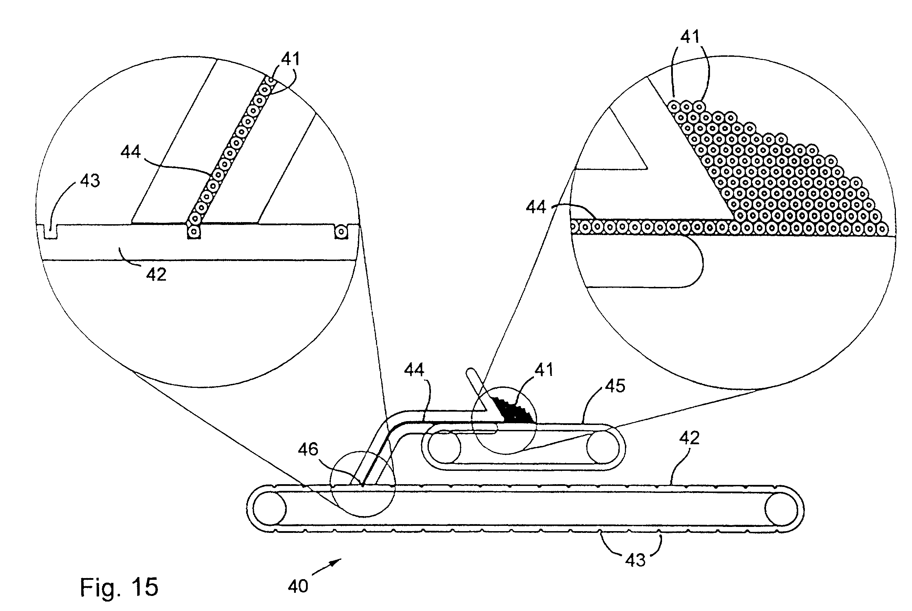

In the following Figs. 15-23 like parts are denoted by the same reference numerals.

Referring to Fig. 15, there is indicated generally at 40, apparatus for feeding capillary tubes 41 from a supply thereof to a conveyor belt 42 with regularly spaced-apart transverse grooves 43. The capillary tubes 41 enter a channel 44 which can accommodate a single layer of capillary tubes 41 in response to the anti-clockwise movement of a belt 45 and are delivered one at a time to the grooves 43 as the conveyor belt 42 moves in a clockwise direction. The capillary tubes 41 travel along the channel 44 through the combined effects of gravity and the belt 45. Each time a groove 43 is positioned at end 46 a capillary tube 41 is delivered thereto.

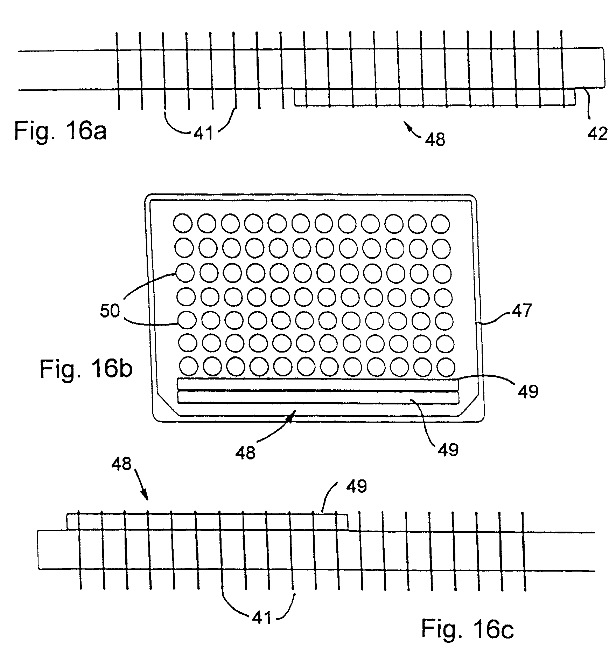

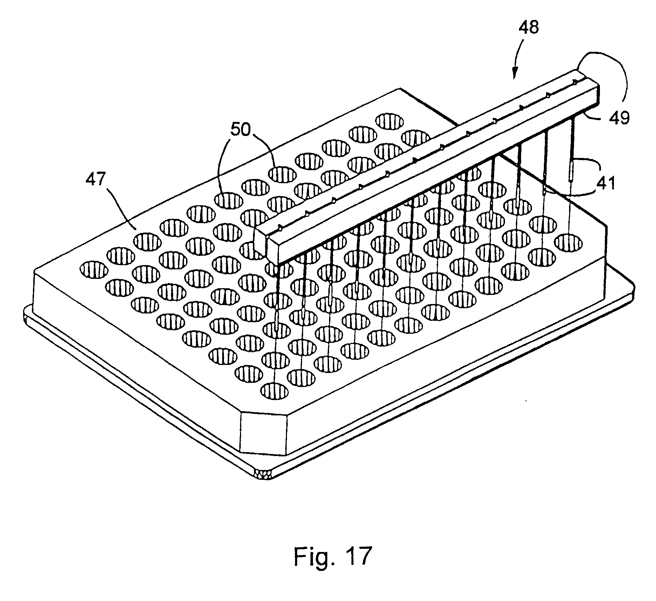

Referring to Figs. 16a-c and Fig. 17, the steps involved in transferring the capillary tubes 41 to a microtitre plate 47 for filling are illustrated. Capillary tubes 41 are lifted from the belt 42 by a clamping device indicated generally at 48. The clamping device 48 comprises two elongate members 49 which clamp a plurality of tubes 41 therebetween by applying a sideways force to the tubes. In this way, the capillary tubes 41 are transferred from the conveyer belt 42 to the microtitre plate 47 for filling. The spacing of the grooves 43 on the belt 42 is the same as the spacing of the wells 50 in the microtitre plate 47. The clamping device 48 lifts and transports the tubes 41 in groups of 12 corresponding to the number of wells 50 in one row of the microtitre plate 47. During the transporting step, the clamping device 48 is rotated through 90° so that one end of the capillary tubes 41 is lowered into the wells 50 of the microtitre plate 47.

The clamping device 48 and the capillary tubes 41 are free to move along a vertical axis to allow the tubes 41 to be lowered into the wells 50 of the microtitre plate 47. The capillary tubes 41 are held in the wells 50 for a period of time sufficient to allow liquid in the respective wells 50 to be drawn into the tubes 41 by capillary action. Once the given filling time has elapsed, the tubes 41 are withdrawn and the clamping device 48 is rotated through 90° to again assume a horizontal orientation.

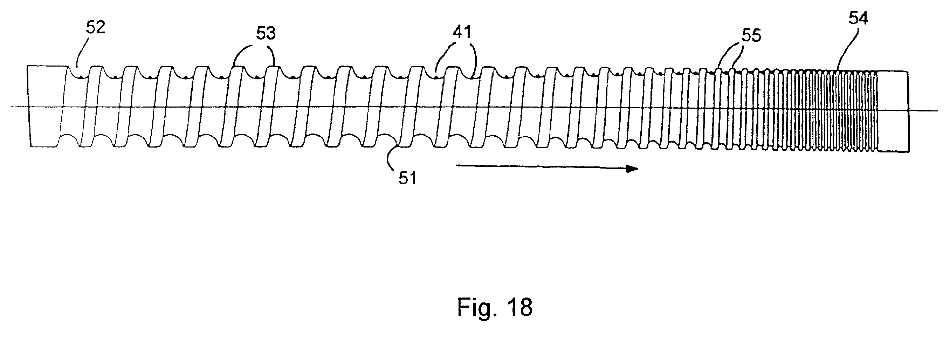

Following filling of the capillary tubes 41, said tubes are transferred to a screw - or worm device 51 which is used to reduce the spacing between the capillary tubes 41 as shown in Fig. 18. The capillary tubes 41 are delivered to the screw device 51 at end 52. Thread 53 of the screw device 51 has a varying pitch, being larger at end 52 than at end 54. As the screw device 51 turns, the capillary tubes 41 advance along its length in the direction of the arrow and due to the changing pitch also come closer together. At the end 54 tubes 41 are only separated by wall 55 of the thread 53.

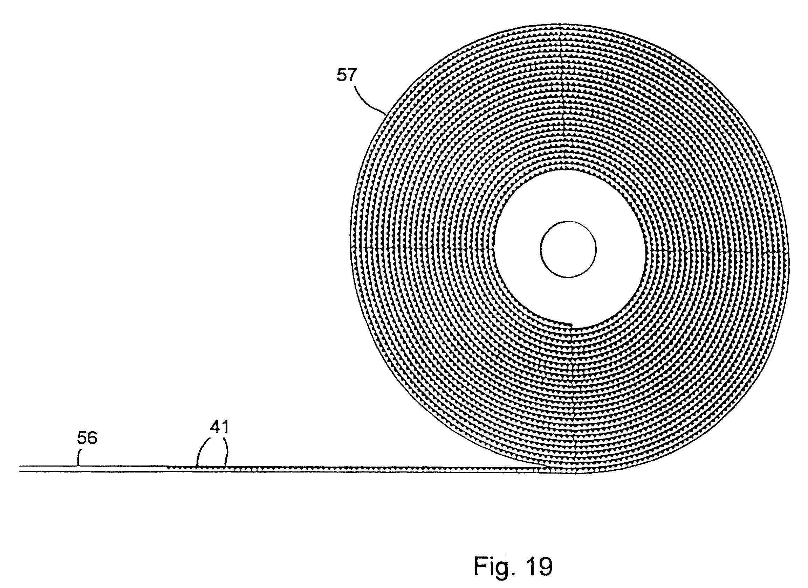

Referring to Fig. 19, the capillary tubes 41 are discharged from the screw device 51 onto a tape 56 which has a layer of adhesive to which the tubes 41 are stuck with their sides abutting. The tape 56 advances at the same rate as the tubes 41 leave the screw device 51. The tape 56 is then progressively rolled up into a tightly packed spiral array as shown at 57.

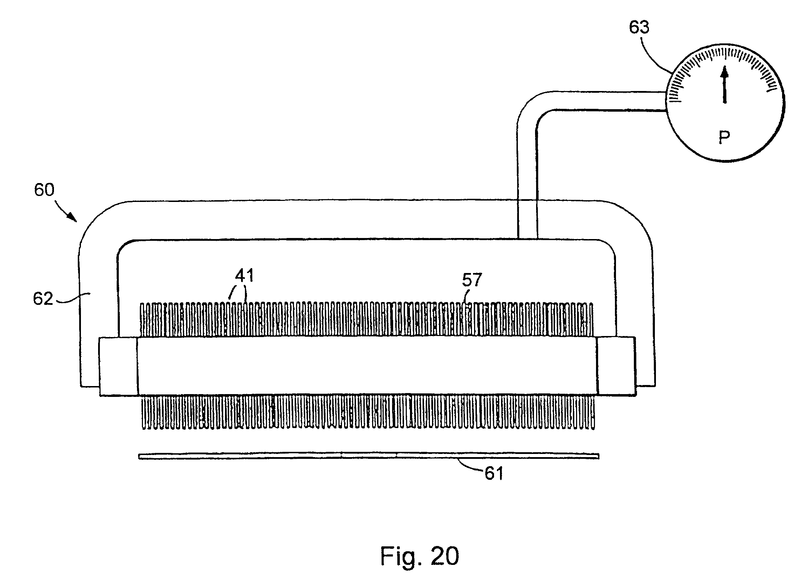

Referring to Fig. 20, there is indicated generally at 60, apparatus for releasing the liquid in the capillary tubes 41 defining the array 57 to the surface of a solid support 61 and which is movable relative thereto. The apparatus 60 comprises a housing 62 which is adapted to receive said array 57. The housing 62 is connected to an air pump 63 and by creating an area of positive pressure relative to the exterior of the housing 62 forces the liquid out of the tubes 41 onto the surface of the solid support 61, when required.

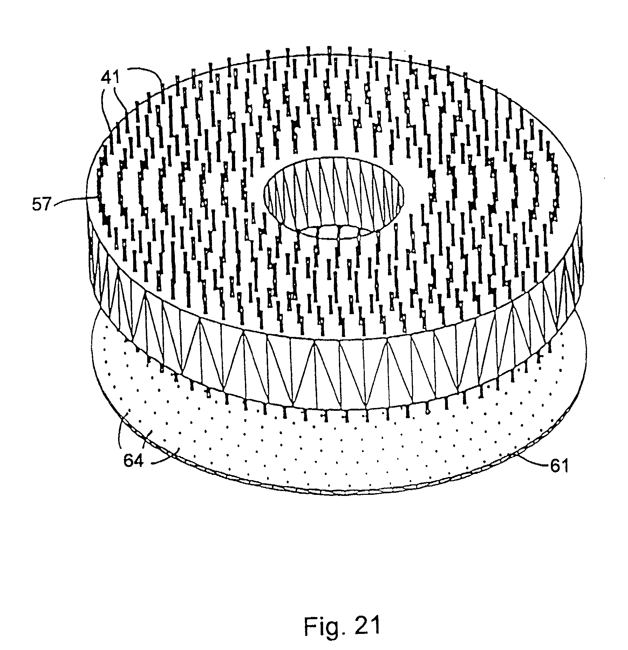

Fig. 21 shows the array 57 of capillary tubes 41 disposed above the solid support 61 following application of droplets of liquid analytes from the tubes 41 and the pattern of discrete spots 64 disposed on said solid support 61.

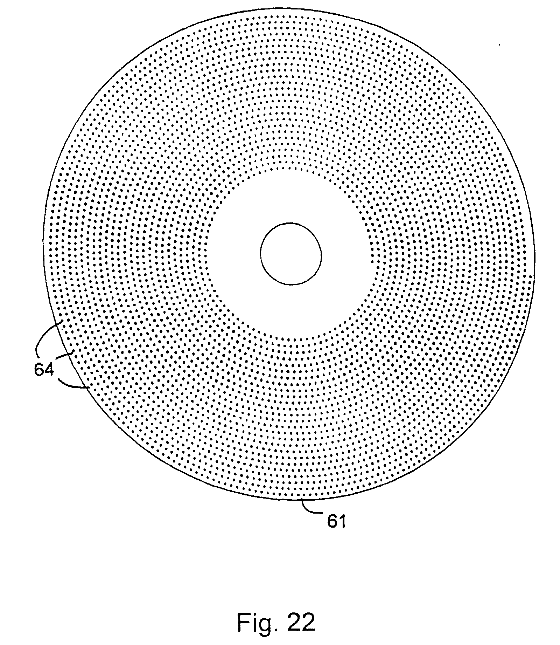

Fig. 22 is a plan view of the solid support 61 showing the spiral arrangement of the discrete spots 64 of the applied liquid analyte.

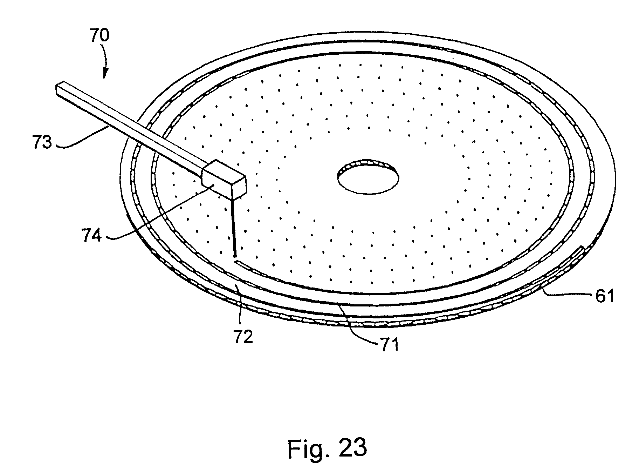

Referring to Fig. 23, there is illustrated a device indicated generally at 70, for applying target cells in a semi-solid phase 71 to surface 72 of the solid support 61 following drying of the liquid analytes. Device 70 comprises an arm 73 and a printing head 74. The solid support 61 is free to rotate and the device 70 is free to move in the z plane and x or y planes, so that the printing head 74 is located by a combination of motion of the arm 73 and the solid support 61.

## Claims

1. An apparatus for the simultaneous transfer of liquid analytes, comprising:
- a plurality of capillary tubes arranged in a holder device , wherein the liquid analytes are taken up by the plurality of capillary tubes by capillary action;
- a housing adapted to receive said plurality of capillary tubes; and
- means to apply a stimulus to effect transfer from the capillary tubes to at least one solid support.

2. An apparatus according to claim 1, wherein the capillary tubes are arranged in the holder device in an array.

3. An apparatus according to claim 2, wherein said array is a rectangular array.

4. An apparatus according to claim 2, wherein said array is a concentric array.

5. An apparatus according to claim 2, wherein said array is a spiral array.

6. An apparatus according to any of the previous claims 1-5, whereby the capillary tubes are parallel aligned with respect to each other.

7. An apparatus according to any of the previous claims 1-6, whereby the ends of the capillary tubes define a flat surface.

8. An apparatus according to any of the previous claims 1-7, wherein the number of the capillary tubes is 96.

9. An apparatus according to any of the previous claims 1-8, wherein the means to apply a stimulus comprises a pressure change using a piezo-electric element.

10. An apparatus according to the previous claim 1-8, wherein the housing is connected to an air pump, which is adapted to create a pressure difference relative to the exterior of the housing to force the liquid analytes out of the capillary tubes.

11. An apparatus according to any of the previous claims 1-8, wherein the means to apply a stimulus provokes high frequency conditions to break a liquid column into droplets.

12. An apparatus according to any of the previous claims 1-11, wherein the droplets of each transferred liquid analyte onto the support have a size of nanolitre or picolitre.

13. An apparatus according to any of the previous claims 1-12, wherein the open ends of the capillary tubes are able to dispense the liquid analytes to the solid support with or without direct contact between the capillary tube and the solid support.

14. A holder device suitable for use in the apparatus according to any of the previous claims 1-13.

15. A holder device according to claim 14, comprising a plurality of capillary tubes arranged herein.

16. A holder device according to claim 14 or 15, wherein the capillary tubes are arranged in an array.

17. A holder device according to any of the previous claims 14-16, whereby the capillary tubes are parallel aligned with respect to each other.

18. A holder device according to any of the previous claims 14-17, whereby the ends of the capillary tubes define a flat surface.

19. A holder device according to any of the previous claims 14-18, wherein the number of the capillary tubes is 96.

20. A holder device according to any of the previous claims 14-19, comprising two plates for maintaining the capillary tubes in a desired relationship with respect to each other.

21. A holder device according to any of the previous claims 14-20, whereby the distance of the capillary tubes in an array is variable.

22. A process for adapting the distance between the capillary tubes in an array from which liquid analytes are able to be simultaneously transferred to a solid support such that the transferred liquid analytes remain isolated from one another, comprising:
i) filling the capillary tubes,
ii) transferring the filled capillary tubes to a screw or worm device having a thread with a varying pitch, and
iii) turning said device thereby varying the spacing between the capillary tubes.

23. A process according to claim 22, wherein the distance between the capillary tubes is varied to meet a specific requirement such as a distance of 1 mm, 1,414 mm, 2 mm, 2,236 mm, 3 mm, 3,623 mm.

24. A process according to claim 22or 23, further comprising discharging the capillary tubes from the device onto a tape having an adhesive layer.

25. Use of a apparatus or holder device according to any of the previous claims 1- 21 for the rapid screening of compounds.

26. Use according to claim 25 for the rapid screening of anti-HIV compounds.

27. Use according to claim 25 or 26 in the measurement of target analyte interactions.

28. Use of an apparatus according to any of previous claims 1 to 13 or a holder device according to any of the previous claims 14 to 21 for the simultaneous transfer of liquid analytes from a plurality of capillary tubes, comprising the steps of filling the capillary tubes with liquid analytes by capillary action and transferring the liquid analytes to a support by applying a stimulus to effect said transfer.

29. Use of an apparatus according to any of the previous claims 1 to 13 or a holder device according to any of the previous claims 14 to 21 for the simultaneous transfer of liquid analytes from a plurality of capillary tubes, comprising the steps of filling a 8 x 12 array of capillary tubes with liquid analytes by capillary action and transferring the liquid analytes to a support by applying a stimulus to effect said transfer

30. Use of an apparatus according to claim 29 wherein the liquid analytes are transferred to a solid support by applying a pressure differential relative to the exterior of the housing to effect said transfer.
